# FASCICULE DE BREVET EUROPEEN

(11) **EP 1 834 557 B1**
(45) Date de publication et mention de la délivrance du brevet: **11.04.2012**
(21) Numéro de dépôt: 07290315.6
(22) Date de dépôt: 13.03.2007
(51) Int. Cl.: A47J 37/07

(54) **Cuve d'un barbecue électrique**
Wanne eines Elektrogrills
Vat for an electric barbecue

(30) Priorité: 16.03.2006 FR 0602331
(43) Date de publication de la demande: 19.09.2007
(73) Titulaire: SEB SA, 69130 Ecully (FR)
(72) Inventeur: Viret, Franck, 74600 Seynod (FR); Dauvergne, François, 74600 Seynod (FR)
(74) Mandataire: Pichat, Thierry

(56) Documents cités:
- EP-A1- 1 057 437
- FR-A1- 2 730 796
- FR-A1- 2 759 842
- JP-A- 2003 276 129

## Description

La présente invention concerne une cuve d'un barbecue électrique.

De façon classique, un barbecue électrique comprend une surface de cuisson adaptée à supporter un aliment à cuire, un dispositif électrique de chauffe disposé dans la surface de cuisson et adapté à cuire l'aliment, et une cuve adaptée à supporter la surface de cuisson et le dispositif électrique de chauffe et à contenir de l'eau. L'eau est utilisée, selon les barbecues, pour protéger thermiquement les parois de la cuve quand celle-ci est réalisée en une matière supportant mal les températures élevées, et/ou pour refroidir les jus de cuisson provenant de l'aliment et éviter qu'ils ne brûlent au contact d'une surface de réception (en général en métal) à température élevée portée soit par la cuve elle-même, soit par un réflecteur thermique flottant dans la cuve.

La demande de brevet EP 1 057 437 A décrit un appareil électrique avec une cuve de emisson à revêtement intérieur anti-adhésif.

Le problème est qu'il est souvent malaisé de nettoyer correctement la cuve (c'est-à-dire la cuve à eau et/ou le réflecteur thermique) d'un barbecue électrique.

La présente invention vise à réaliser une cuve facilement nettoyable.

Selon l'invention, la cuve comprend sur ses faces externes intérieure et extérieure un revêtement anti-adhésif.

La présence du revêtement anti-adhésif permet de nettoyer très facilement la cuve, aussi bien leur face intérieur (présence de jus de cuisson concentrés dans le cas d'un réflecteur thermique, présence d'eau grasse dans le cas d'une cuve à eau faisant également office de réflecteur thermique, présence d'eau ayant chauffée dans le cas d'une cuve à eau) que leur face extérieure (présence d'eau ayant chauffée dans le cas d'un réflecteur thermique, risque de coulure du liquide contenu dans la cuve à eau lors de son nettoyage).

D'autres particularités et avantages apparaîtront dans la description du mode de réalisation donné à titre d'exemple non limitatif et illustré au dessin représentant en perspective une cuve conforme à la présente invention.

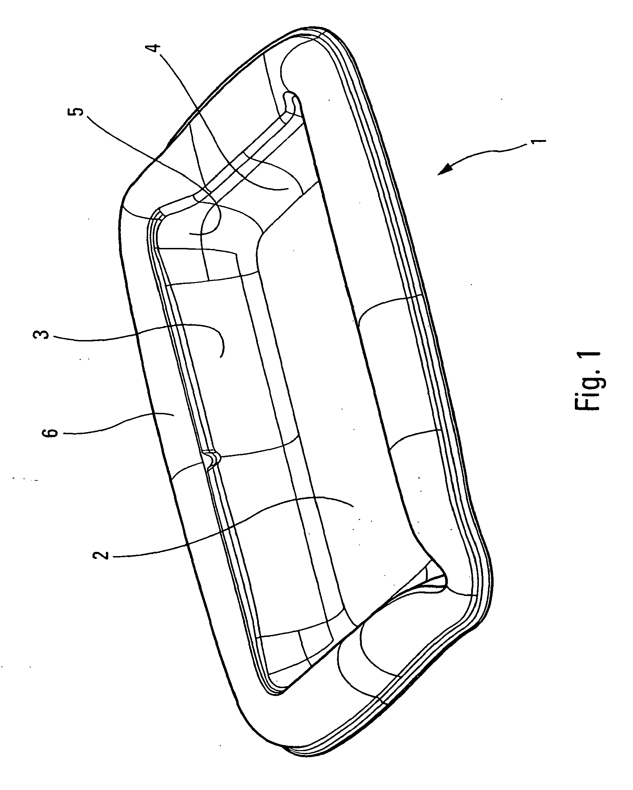

La cuve 1 à eau illustrée à la figure 1 fait partie d'un barbecue électrique compact qui comprend une surface de cuisson adaptée à supporter un aliment à cuire, un dispositif électrique de chauffe disposé dans la surface de cuisson et adapté à cuire l'aliment, une cuve 1 adaptée à supporter la surface de cuisson et le dispositif électrique de chauffe, et des pieds. Du fait de la compacité du barbecue, la cuve 1 est adaptée, d'une part, à contenir de l'eau de façon à isoler thermiquement le support sur lequel repose le barbecue électrique et à recevoir les jus de cuisson tout en les empêchant de brûler, et, d'autre part, à faire office de réflecteur thermique de façon à réfléchir vers la surface de cuisson le rayonnement thermique émis par le dispositif électrique de chauffe vers la cuve 1 et, en conséquence, à isoler thermiquement le support sur lequel repose le barbecue électrique.

La cuve 1 définit un volume qui est délimité par une paroi de fond 2 et des parois latérales 3 (ici, quatre parois latérales 3). Les parois latérales 3 rejoignent la paroi de fond 2 par des arêtes 4 sensiblement horizontales et elles se rejoignent deux à deux selon des arêtes 5 sensiblement verticales. Par ailleurs, pour faciliter la manipulation de la cuve 1, l'extrémité libre des parois latérales est prolongée par un rebord périphérique 6 qui s'étend vers l'extérieur de la cuve 1, de façon sensiblement horizontale. Dans le présent mode de réalisation, afin de faciliter le nettoyage de la cuve 1, les arêtes horizontales 5 et verticales 4 sont arrondies.

Selon l'invention, la cuve 1 comprend sur ses faces externes intérieure et extérieure un revêtement anti-adhésif.

Le revêtement anti-adhésif utilisé peut être le même pour les deux faces de la cuve 1.

De plus, l'utilisation du revêtement anti-adhésif permet de protéger la cuve 1 de la rouille.

Par ailleurs, l'emploi d'un revêtement donnant une apparence gris clair sur les faces interne et externe de la cuve 1 permet de réduire l'encombrement du barbecue, et plus précisément, permet de réduire la hauteur des pieds qui supportent la cuve 1 (ce qui est notable dans le cas de barbecue de table). En effet, la couleur gris clair apparente sur la face intérieure permet d'avoir un fort pouvoir réfléchissant. De ce fait, la majorité de l'énergie thermique reçue par rayonnement provenant du dispositif électrique de chauffe (de la résistance électrique de chauffe) est renvoyée vers la surface de cuisson et est très peu absorbée par la cuve 1. De plus, cette même couleur gris clair apparente sur la face extérieure permet d'avoir un faible pouvoir émissif, ce qui signifie que la faible quantité d'énergie absorbée par la cuve 1 n'est que très peur re-émise par rayonnement thermique (en direction de l'extérieur et donc en direction du support du barbecue). De préférence, la couleur apparente a pour indice Pantone 8001C ou RAL 9006.

L'invention n'est pas limitée au mode de réalisation donné à titre d'exemple. Ainsi, la cuve pourrait ne pas servir de réflecteur thermique mais contenir de l'eau sur laquelle un réflecteur thermique flotterait. L'invention pourrait aussi s'appliquer à un réflecteur thermique ne faisant pas office de cuve à eau, mais flottant dans une cuve.

## Revendications

1. Cuve (1) d'un barbecue électrique comprenant un revêtement anti-adhésif sur sa face intérieure, **caractérisée en ce qu'**elle comprend également un revêtement anti-adhésif sur sa face extérieure.

2. Cuve (1) selon la revendication 1, **caractérisée en ce que** le revêtement anti-adhésif appliqué sur la face intérieure est le même que celui appliqué sur la face extérieure.

3. Cuve (1) selon la revendication 1 ou 2, **caractérisée en ce que** sa couleur apparente sur ses faces intérieure et extérieure est gris clair.

4. Cuve (1) selon la revendication 3, **caractérisée en ce que** sa couleur apparente de sa face intérieure est la même que celle de sa face extérieure.

5. Cuve (1) selon la revendication 3 ou 4, **caractérisée en ce que** la couleur apparente a pour indice Pantone 8001C ou RAL 9006.

6. Cuve (1) selon l'une des revendications 1 à 5, **caractérisée en ce que** chaque arête (5) reliant deux parois latérales (3) de la cuve (1) est arrondie.

7. Cuve (1) selon l'une des revendications 1 à 6, **caractérisée en ce que** chaque arête (4) reliant une paroi latérale (3) à la paroi de fond (2) de la cuve (1) est arrondie.

8. Cuve (1) selon l'une des revendications 1 à 7 formant cuve à eau.

9. Cuve (1) selon l'une des revendications 1 à 7 formant réflecteur thermique.

## Claims

1. A pan (1) for an electric barbecue, including a non-stick coating on its inner face, **characterised in that** it further includes a non-stick coating on its outer face.

2. A pan (1) according to claim 1, **characterised in that** the non-stick coating applied to the inner face is the same as that applied to the outer face.

3. A pan (1) according to claim 1 or 2, **characterised in that** the visible colour on its inner and outer faces is light grey.

4. A pan (1) according to claim 3, **characterised in that** the visible colour of its inner face is the same as that of its outer face.

5. A pan (1) according to claim 3 or 4, **characterised in that** the visible colour has a Pantone index 8001C or RAL 9006.

6. A pan (1) according to one of claims 1 to 5, **characterised in that** each edge (5) connecting two side walls (3) of the pan (1) is rounded.

7. A pan (1) according to one of claims 1 to 6, **characterised in that** each edge (4) connecting a side wall (3) to the bottom wall (2) of the pan (1) is rounded.

8. A pan (1) according to one of claims 1 to 7, forming a water pan.

9. A pan (1) according to one of claims 1 to 7, forming a thermal reflector.

## Patentansprüche

1. Wanne (1) eines Elektrogrills umfassend eine Antihaftbeschichtung an deren Innenseite, **dadurch gekennzeichnet , dass** sie auch an deren Außenseite eine Antihaftbeschichtung aufweist.

2. Wanne (1) nach Anspruch 1, **dadurch gekennzeichnet , dass** die auf der Innenseite aufgebrachte Antihaftbeschichtung die gleiche ist wie die auf der Außenseite aufgebrachte.

3. Wanne (1) nach Anspruch 1 oder 2, **dadurch gekennzeichnet , dass** ihre augenscheinliche Farbe auf der Innenseite und der Außenseite hellgrau ist.

4. Wanne (1) nach Anspruch 3, **dadurch gekennzeichnet , dass** ihre augenscheinliche Farbe auf der Innenseite die gleiche ist wie auf der Außenseite.

5. Wanne (1) nach Anspruch 3 oder 4, **dadurch gekennzeichnet , dass** die augenscheinliche Farbe einen Farbindex von Pantone 8001C oder RAL 9006 hat.

6. Wanne (1) nach einem der Ansprüche 1 bis 5, **dadurch gekennzeichnet , dass** jede Kante (5), die zwei Seitenwände (3) der Wanne (1) verbindet, abgerundet ist.

7. Wanne (1) nach einem der Ansprüche 1 bis 6, **dadurch gekennzeichnet , dass** jede Kante (5), die eine Seitenwand (3) mit der Bodenplatte (2) der Wanne (1) verbindet, abgerundet ist.

8. Wanne (1) nach einem der Ansprüche 1 bis 7, die eine Wasserwanne bildet.

9. Wanne (1) nach einem der Ansprüche 1 bis 7, die einen thermischen Reflektor bildet.
